# EUROPÄISCHE PATENTSCHRIFT

(11) **EP 1 762 730 B1**
(45) Veröffentlichungstag und Bekanntmachung des Hinweises auf die Patenterteilung: **04.09.2013**
(21) Anmeldenummer: 06018513.9
(22) Anmeldetag: 05.09.2006
(51) Int. Cl.: F16B 12/20

(54) **Gehrungsverbindersystem**
Mitrejoinersystem
Système de connexion de joint ä onglet

(30) Priorität: 13.09.2005 DE 102005043765
(43) Veröffentlichungstag der Anmeldung: 14.03.2007
(73) Patentinhaber: Rixen, Wolfgang, 42699 Solingen (DE); Pies, Gerrit, 42699 Solingen (DE)
(72) Erfinder: Rixen, Wolfgang, 42699 Solingen (DE); Pies, Gerrit, 42699 Solingen (DE)
(74) Vertreter: Draudt, Axel Hermann Christian

(56) Entgegenhaltungen:
- WO-A2-97/32140
- DE-A1- 10 318 653
- DE-U1- 9 415 356
- FR-A- 1 311 150

## Beschreibung

Die Erfindung betrifft ein Gehrungsverbindersystem mit ersten und zweiten Profilstäben, von denen mindestens einer eine offene oder geschlossene, aber bei Bedarf zu öffnende Längsnut aufweist, mit einem Verbindungsstück, das an einem Ende ein Außengewinde aufweist und in einen ersten Kanal eingesetzt ist, der quer zu mindestens einer der beiden sich einander berührenden Flächen der auf Gehrung verbundenen ersten und zweiten Profilstäbe verläuft, wobei das Außengewinde in das im zweiten Profilstab eingesetztes erstes Widerlagerstück eingedreht ist und das entgegengesetzte Ende mit einer Aussparung versehen ist derart, dass diese Aussparung in ein zweites in einen zum ersten Kanal quer verlaufenden Kanal einsetzbares Widerlagerstück eingesetzt ist, das ein Innengewinde aufweist zur Aufnahme einer Schraube, deren vorderes Ende mit der Aussparung sich in Eingriff befindet.

Ein derartiges Gehrungsverbindersystem ist in der DE 94 15 356.6 U1 beschrieben. Es sind weitere Gehrungsverbinder bekannt. So vertreibt z.B. die Firma Kanya Gehrungsverbindungen, die dazu gedacht sind, einen auf Gehrung geschnittenen Profilstab an eine Seite eines mit einer hinterschnittenen Nut versehenen Profilstabs anzuschließen. Dieser Gehrungsverbinder besteht dabei aus einem abgebogenen Ankerkopf, beispielsweise mit einem Winkel von 15°, 30° oder 45°, in linker und rechter Ausführung. Der Ankerkopf ist halblinsenförmig ausgebildet und hintergreift die hinterschnittene Nut, während das entgegengesetzte Ende in ein Widerlagerstück eingreifen und dort fixiert werden kann. Das Widerlagerstück ist dabei rohrförmig ausgebildet und wird in einem im Nutbereich quer zur Längsrichtung des Profilstabs angeordneten Bohrloch eingesetzt.

Für sogenannte Doppelgehrungsverbindungen sind sogenannte gelenkige Ankerkopfverbindungen vorgesehen, die dann für einen Gehrungsbereich von 0-90° verwandt werden können. Bei dieser Art von sogenannter Doppelgehrungsverbindung ist, wie auch bei der Ankerkopfgehrungsverbindung, das Verbindungselement in der Längsbohrung des Profilstabes angeordnet. Auch bei dieser Doppelgehrungsverbindung werden Widerlagerstücke verwandt, die demjenigen der Ankerkopfgehrungsverbindung ähnlich sind.

Den beschriebenen Gehrungsverbindungen ist gemein, dass für viele Anwendungsfälle die Verbindungskraft unzureichend ist.

Der Erfindung liegt daher die Aufgabe zugrunde, ein Gehrungsverbindungssystem der eingangs genannten Art anzugeben, das mit technisch einfachen Mitteln stets eine sichere und feste Gehrungsverbindung zweier Profilstäbe ermöglicht.

Diese Aufgabe wird bei einem Gehrungssystem der eingangs genannten Art erfindungsgemäß dadurch gelöst, dass der erste Kanal beide auf Gehrung geschnittene Stirnflächen der Profilstäbe durchdringt und das erste Widerlagerstück hülsenförmig ausgebildet ist mit einem quer zur Hülsenlängsachse verlaufenden Gewinde zur Aufnahme des Außengewindes, und dass das Außengewinde zur Ausbildung einer Kontaktfläche entfernt ist, mit welcher eine in das erste Widerlagerstück eingedrehte Fixierschraube in Kontakt gebracht ist. Da die jeweiligen Stirnflächen der zu verbindenden Profilstäbe auf Gehrung geschnitten sind, so ist es dabei vorteilhaft, wenn der erste Kanal beide auf Gehrung geschnittene Stirnflächen der Profilstäbe durchdringt und das erste Widerlagerstück hülsenförmig ausgebildet ist mit einem quer zur Hülsenlängsachse verlaufenden Gewinde zur Aufnahme des Außengewindes. Damit das mit dem Außengewinde versehene Ende des Verbindungsstücks besser fixiert werden kann, ist es des weiteren vorteilhaft, wenn das Außengewinde zur Ausbildung einer Kontaktfläche entfernt ist, mit welcher eine in das erste Widerlagerstück eindrehbare Fixierschraube in Kontakt bringbar ist.

Aus Gründen der Materialeinsparung ist es vorgesehen, dass das Verbindungsstück zwischen dem Außengewinde und der Aussparung eine Einschnürung aufweist.

Damit einfach sichergestellt werden kann, dass das Verbindungsstück zumindest in etwa zu gleichen Teilen in die beiden Stirnflächen der zu verbindenden Profilstäbe eintaucht, ist es vorteilhaft, wenn das Verbindungsstück eine Markierung aufweist, die in Längsrichtung in etwa in der Mitte angeordnet ist.

Selbstverständlich ist es möglich, die hülsenförmig ausgebildeten Widerlagerstücke in die entsprechenden Öffnungen bzw. Kanäle einzusetzen und durch aufwendiges und oftmals auch schwieriges manuelles Positionieren in die richtige Lage zur Aufnahme des Verbindungsstücks zu versetzen. Wesentlich erleichtert wird diese Positionierungsaufgabe dadurch, dass die beiden hülsenförmig ausgebildeten Widerlagerstücke an den im Gebrauchszustand zu den Außenflächen der Profilstäbe weisenden Stirnseiten Positionsanzeiger aufweisen.

Da der erste Kanal nach Möglichkeit im wesentlichen senkrecht zur Gehrungsschnittfläche in die Stirnseiten der Profilstäbe eingebracht werden muss und dies manuell recht aufwendig und teilweise erfolglos ist sowie nicht immer große mit Spannvorrichtungen versehene Bohrmaschinen vorhanden sind, ist es vorteilhaft, wenn eine Bohrlehre zur Herstellung eines in etwa senkrecht zu den Gehrungsflächen verlaufenden ersten Kanals ein Teil des Gehrungsverbindersystems bildet.

Dabei ist gemäß einer Weiterbildung der Erfindung vorgesehen, dass die Bohrlehre L-förmig ausgebildet ist, deren erster Schenkel senkrecht zum zweiten Schenkel bewegbar ist und ein sich in Richtung des und in etwa parallel zum zweiten Schenkel erstreckenden Fortsatz aufweist, der in etwa die Form und die Größe der hülsenförmigen Widerlagerstücke hat, welcher Fortsatz zur Erzeugung des ersten Kanals in die für das hülsenformige Widerlagerstück in den entsprechenden Profilstab vorhandene Öffnung einsetzbar ist, und deren zweiter Schenkel eine in etwa senkrecht zum Fortsatz verlaufende Bohrung zur Führung des den ersten Kanal erzeugenden Bohrers aufweist.

Selbstverständlich ist es möglich, das bereits auf Gehrung geschnittene Profil manuell auf den Vorsatz aufzuschieben, wenn zwischen der Auflagefläche die auf Gehrung geschnittene Stirnfläche und der Stirnfläche selbst ein gewisses Spiel vorhanden ist. Ein derartiges Spiel könnte durch festeres Anziehen des Verbindungsstücks meistens wohl ausgeglichen werden.

Vorteilhafter ist es aber, wenn die beiden Schenkel schraubstockartig über einen Hebel relativ zueinander bewegbar sind.

Dadurch ist es möglich, die beiden Schenkel mittels des Hebels schraubstockartig voneinander zu trennen, den Fortsatz leicht und einfach in den zweiten Kanal einzuführen und anschließend die beiden Schenkel wieder zusammen zu führen, damit die auf Gehrung geschnittene Stirnfläche fest auf der entsprechenden Fläche des zweiten Schenkels aufliegt.

Weitere Merkmale und Vorteile der Erfindung ergeben sich aus der folgenden Beschreibung zweier Ausführungsbeispiele sowie aus den Figuren auf die Bezug genommen wird.

Es zeigen:
- Fig. 1:: eine Draufsicht auf eine Gehrungsverbindung gemäß eines nicht im Schutzumfang enthaltenen Beispiels;
- Fig. 2:: eine Querschnittsansicht der in Fig. 1 gezeigten nicht im Schutzumfang enthaltenen Verbindung;
- Fig. 3:: eine perspektivische Explosionsdarstellung der in Fig.1 und 2 gezeigten Verbindung;
- Fig. 4:: eine Draufsicht auf eine Verbindung gemäß eines Ausführungsbeispiels;
- Fig. 5:: eine Querschnittsansicht der in Fig. 4 gezeigten Verbindung;
- Fig. 6:: eine perspektivische Explosionsdarstellung der in den Fig. 4 und 5 gezeigten Verbindung;
- Fig. 7:: eine perspektivische Darstellung einer Bohrlehre;
- Fig. 8:: eine teilweise geschnittene Darstellung der in Fig. 7 gezeigten Bohrlehre.

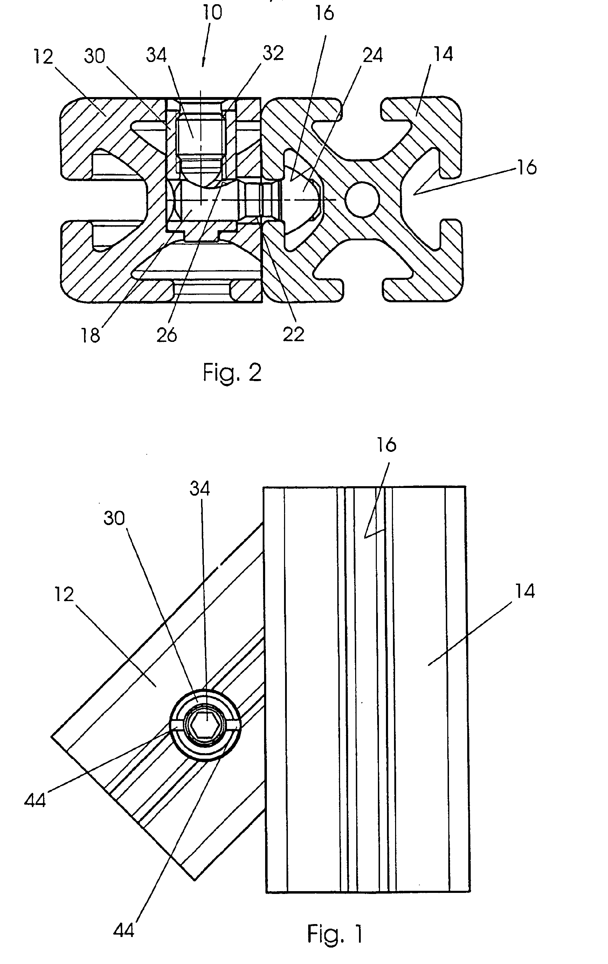

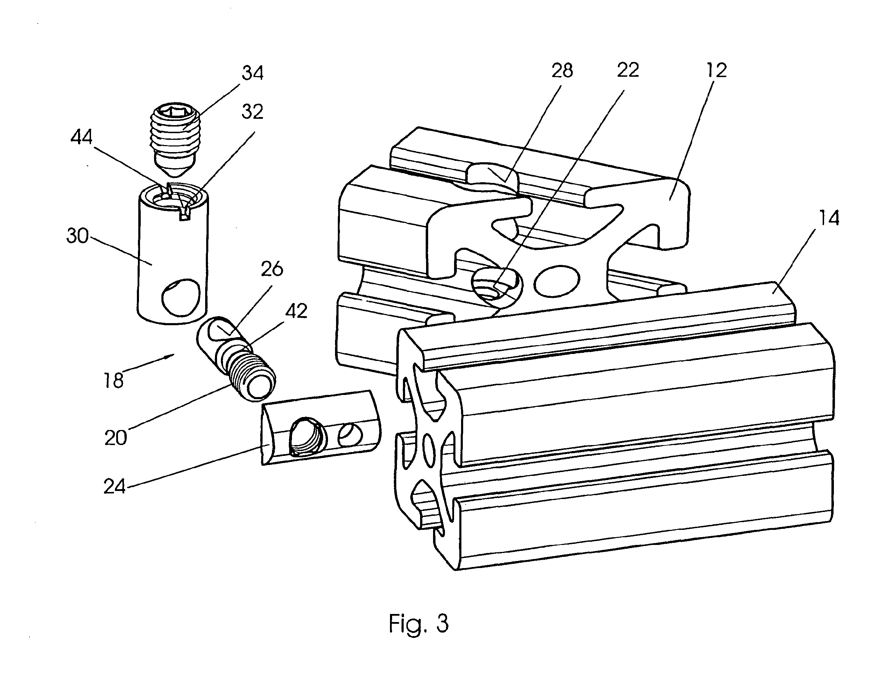

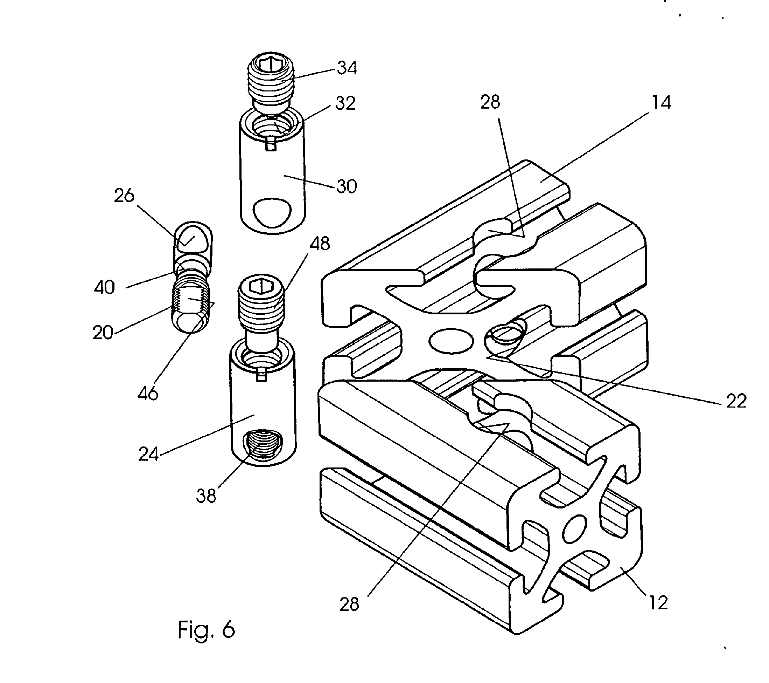

Anhand der Fig.1 bis 8 werden nunmehr ein nicht geschütztes Beispiel und ein Ausführungsbeispiel eines Gehrungsverbindungssystems 10 beschrieben. Dabei bedeuten gleiche Bezugszeichen gleiche Merkmale, sofern nichts anderes ausgesagt ist.

Die zwei beschriebenen Beispiele für ein Gehrungsverbindungssystem 10 dienen zum Verbinden erster und zweiter Profilstäbe 12 und 14. Dabei muss für das ungeschützte Beispiel mindestens einer der Profilstäbe 12 oder 14 eine offene oder auch geschlossene Längsnut 16 aufweisen, wobei eine geschlossene Längsnut 16 dann bedarfsweise einfach geöffnet werden kann.

Wie sich aus den Figuren 1 bis 3 ergibt, weist das Gehrungsverbindersystem 10 gemäß des ungeschützten Beispiels ein Verbindungsstück 18 auf, das an einem Ende ein Außengewinde 20 hat und in einen ersten Kanal 22 eingesetzt ist, der in diesem Fall in dem ersten Profilstab 12 senkrecht zur Gehrungsfläche dieses ersten Profilstabs 12 eingebracht worden ist. Selbstverständlich bedeutet der Begriff "senkrecht" die idealste Form der Positionierung des ersten Kanals 22, so dass auch oftmals davon gesprochen werden kann, dass der erste Kanal 22 quer zu mindestens einer der beiden sich einander berührenden Flächen der auf Gehrung zu verbindenden ersten und zweiten Profilstäbe 12 und 14 verläuft.

Bei dem in den Fig. 1 bis 3 gezeigten ungeschützten Beispiel weist, wie oben schon gesagt, lediglich der erste Profilstab 12 diesen ersten Kanal 22 auf, da das mit dem Außengewinde 20 versehene Ende des Verbindungsstücks 18 bei einem im zweiten Profilstab 14 eingesetztes erstes Widerlagerstück 24 eingedreht ist.

Dabei ist das entgegengesetzte Ende des Verbindungsstücks 18 mit einer Aussparung 26 derart versehen, dass diese Aussparung 26 in ein zweites in einen zum ersten Kanal 22 quer verlaufenden Kanal 28 einsetzbares Widerlagerstück 30 eingesetzt ist. Dieses zweite Widerlagerstück 30 weist ein Innengewinde 32 auf, und zwar zur Aufnahme einer Schraube 34, deren vorderes Ende mit der Aussparung 26 in Eingriff bringbar ist und somit das Verbindungsstück 18 fixieren kann. Üblicherweise ist die Aussparung 26 halbkreisförmig ausgebildet und so angeordnet, dass bei dem Eindrehen der Schraube 34 das Verbindungsstück 18 auf Zug beansprucht wird und somit die beiden Profilstäbe 12 und 14 aufeinander zu bewegt.

Bei dem in den Fig. 1 bis 3 gezeigten ungeschützten Beispiel ist das erste Widerlagerstück ein sogenannter Nutenstein 24, der in die Längsnut 16 eingesteckt worden ist.

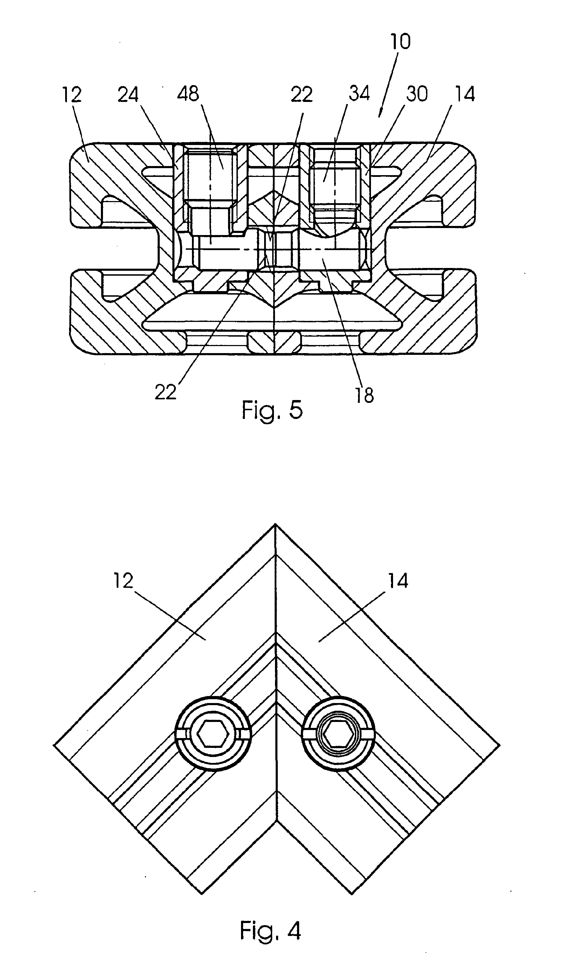

In den Fig. 4 bis 6 ist ein Ausführungsbeispiel einer Gehrungsverbindung bzw. eines Gehrungsverbindersystems 10 dargestellt. Bei dieser Verbindungsart werden zwei Profilstäbe 12 und 14 an ihren entsprechenden Stirnflächen miteinander verbunden, die jeweils auf die gewünschte Gehrung geschnitten worden sind.

Dabei durchdringt diesmal der erste Kanal 22 beide auf Gehrung geschnittene Stirnflächen der Profilstäbe 12 und 14. Das erste Widerlagerstück 24 ist hierbei hülsenförmig ausgebildet mit einem quer zur Hülsenlängsachse verlaufenden Gewinde 38, das der Aufnahme des Außengewindes 20 dient. Ansonsten werden für dieses zweite Ausführungsbeispiel eines Gehrungsverbindersystems 10 die gleichen Bestandteile wie bei dem ersten Ausführungsbeispiel verwandt. Im Unterschied zum ersten Ausführungsbeispiel weist nun auch der zweite Profilstab einen zweiten Kanal 28 auf, und zwar zur Aufnahme des ersten Widerlagerstücks 24.

Beiden Beispielen ist gemein, dass das Verbindungsstück 18 zwischen dem Außengewinde 20 und der Aussparung 26 eine Einschnürung 40 hat. Diese befindet sich in etwa in der Mitte in Längsrichtung des Verbindungsstücks 18 gesehen. Ebenfalls in etwa der Mitte des Verbindungsstücks 18 ist eine Markierung 42 vorhanden, die der Einstelltiefe des einen Endes des Verbindungsstücks 18 in den zweiten Profilstab 14 dient.

Des Weiteren weisen beide hülsenförmig ausgebildeten Widerlagerstücke 20 und 30 an ihrem im Gebrauchszustand zu den Außenflächen der Profilstäbe 12 und 14 weisenden Stirnseiten Positionsanzeiger 44 auf, um die jeweiligen Öffnungen zur Aufnahme des Verbindungsstücks 18 innerhalb der Längsbohrung der Profilstäbe 12 und 14 in die richtige Position bringen zu können.

Damit dazu Schraubendreher verwandt werden können, sind bei den gezeigten Beispielen die Positionsanzeiger in Form von Aussparungen vorhanden.

Bei dem zweiten Ausführungsbeispiel ist noch ein weiterer Unterschied dahingehend vorhanden, daß das Außengewinde 20 zur Ausbildung einer Kontaktfläche 46 teilweise entfernt ist. Mit dieser Kontaktfläche 46 ist eine in das erste Widerlagerstück 24 eindrehbare Fixierschraube 48 in Kontakt bringbar. Selbstverständlich ist diese Kontaktfläche 46 so angeordnet, dass bei richtiger Kontaktaufnahme zwischen Kontaktfläche 46 und Fixierschraube 48 die Aussparung 26 innerhalb des gegenüberliegenden Profilstabs 14 ebenfalls in Richtung der Schraube 34 zeigt.

Damit die ersten Kanäle 22 nicht manuell mit Hilfe einer Handbohrmaschine gegebenenfalls noch freihändig gefertigt werden müssen und demzufolge große Ungenauigkeiten aufzeigen könnten, weist das Gehrungsverbindersystem 10 noch einen zusätzlichen Bestandteil auf, und zwar eine Bohrlehre 50.

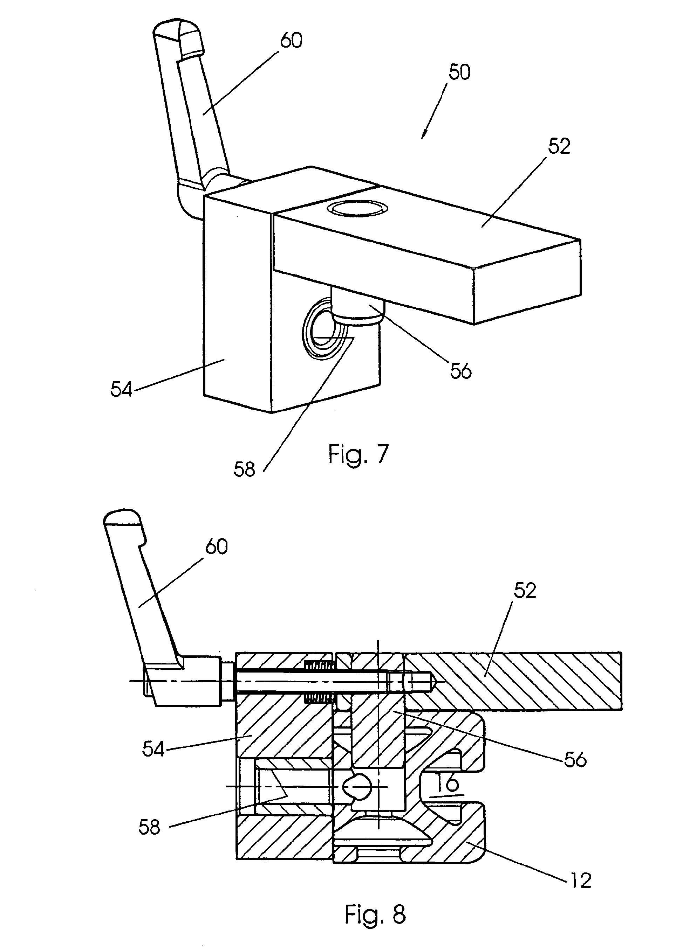

Diese Bohrlehre 50 ist, wie in den Fig. 7 und 8 zu sehen, L-förmig ausgebildet, wobei deren erster Schenkel 52 senkrecht zum zweiten Schenkel 54 bewegbar ist, damit ein sich in Richtung des und in etwa parallel zum zweiten Schenkel 54 erstreckender Fortsatz 56 einfach in den entsprechenden zweiten Kanal 28 des auf Gehrung geschnittenen Profilstabs 12 oder 14 eingeführt werden kann.

Damit dies einfach geschieht, werden mit Hilfe eines Hebels 60 die beiden Schenkel 52 und 54 schraubstockartig relativ zueinander bewegt und zwar für das Einsetzen des Profilstabes 12 oder 14 voneinander weg. Dann kann einfach der zweite Kanal 28 über den Fortsatz 56 geschoben und die beiden Schenkel 52 und 54 wieder aufeinander zu bewegt werden. Dadurch liegt die entsprechende Stirnfläche fest auf der zum ersten Schenkel 52 weisenden Fläche des zweiten Schenkels 54 an. Dabei weist der zweite Schenkel 54 eine in etwa senkrecht zum Fortsatz 56 verlaufende Bohrung 58 auf, die dann der Führung des den ersten Kanal 22 erzeugenden Bohrers dient. Dadurch ist sichergestellt, dass jeder erste Kanal 22 immer in etwa senkrecht zur Stirnfläche des auf Gehrung geschnittenen Profilstabes 12 oder 14 verläuft.

### Bezugszeichenliste:

- 10: Gehrungsverbindungssystem
- 12: 1. Profilstab
- 14: 2. Profilstab
- 16: Längsnut
- 18: Verbindungsstück
- 20: Außengewinde
- 22: 1. Kanal
- 24: 1. Widerlagerstück / Nutenstein
- 26: Aussparung
- 28: 2. Kanal
- 30: 2. Widerlagerstück
- 32: Innengewinde
- 34: Schraube
- 36: 3. Kanal
- 38: Gewinde
- 40: Einschnürung
- 42: Markierung
- 44: Positionsanzeiger
- 46: Kontaktfläche
- 48: Fixierschraube
- 50: Bohrlehre
- 52: 1. Schenkel
- 54: 2. Schenkel
- 56: Fortsatz
- 58: Bohrung
- 60: Hebel

## Patentansprüche

1. Gehrungsverbindersystem (10) mit ersten und zweiten Profilstäben (12,14), von denen mindestens einer eine offene oder geschlossene, aber bei Bedarf zu öffnende Längsnut (16) aufweist, mit einem Verbindungsstück (18), das an einem Ende ein Außengewinde (20) aufweist und in einen ersten Kanal (22) eingesetzt ist, der quer zu mindestens einer der beiden sich einander berührenden Flächen der auf Gehrung verbundenen ersten und zweiten Profilstäbe (12,14) verläuft, wobei das Außengewinde (20) in das im zweiten Profilstab (14) eingesetztes erstes Widerlagerstück (24) eingedreht ist und das entgegengesetzte Ende mit einer Aussparung (26) versehen ist derart, dass diese Aussparung (26) in ein zweites in einen zum ersten Kanal (22) quer verlaufenden Kanal (28) einsetzbares Widerlagerstück (30) eingesetzt ist, das ein Innengewinde (32) aufweist zur Aufnahme einer Schraube (34), deren vorderes Ende mit der Aussparung (26) sich in Eingriff befindet, **dadurch gekennzeichnet, dass** der erste Kanal (22) beide auf Gehrung geschnittene Stirnflächen der Profilstäbe (12,14) durchdringt und das erste Widerlagerstück (24) hülsenförmig ausgebildet ist mit einem quer zur Hülsenlängsachse verlaufenden Gewinde (38) zur Aufnahme des Außengewindes (20, und dass das Außengewinde (20) zur Ausbildung einer Kontaktfläche (46) entfernt ist, mit welcher eine in das erste Widerlagerstück (24) eingedrehte Fixierschraube (48) in Kontakt gebracht ist.

2. Gehrungsverbindersystem (10) nach Anspruch 1, **dadurch gekennzeichnet, dass** das Verbindungsstück (18) zwischen dem Außengewinde (20) und der Aussparung (26) eine Einschnürung (40) aufweist.

3. Gehrungsverbindersystem (10) nach Anspruch 1 oder 2, **dadurch gekennzeichnet, dass** das Verbindungsstück (18) eine Markierung (42) aufweist, die in Längsrichtung in etwa in der Mitte angeordnet ist.

4. Gehrungsverbindersystem (10) nach einem der Ansprüche 1 bis 3, **dadurch gekennzeichnet, dass** die beiden hülsenförmig ausgebildeten Widerlagerstücke (24,30) an den im Gebrauchszustand zu den Außenflächen der Profilstäbe (12,14) weisenden Stirnseiten Positionsanzeiger (44) aufweisen.

5. Gehrungsverbindersystem (10) nach einem der Ansprüche 1 bis 4, **gekennzeichnet durch** eine Bohrlehre (50) zur Herstellung eines in etwa senkrecht zu den Gehrungsflächen verlaufenden ersten Kanals (22).

6. Gehrungsverbindersystem (10) nach Anspruch 5, **dadurch gekennzeichnet, dass** die Bohrlehre (50) L-förmig ausgebildet ist, deren erster Schenkel (52) senkrecht zum zweiten Schenkel (54) bewegbar ist und ein sich in Richtung des und in etwa parallel zum zweiten Schenkel (54) erstreckenden Fortsatz (56) aufweist, der in etwa die Form und die Größe der hülsenförmigen Widerlagerstücke (24,30) hat, welcher Fortsatz (56) zur Erzeugung des ersten Kanals (22) in die für das hülsenförmige Widerlagerstück (24,30) in den entsprechenden Profilstab (12,14) vorhandene Öffnung einsetzbar ist, und deren zweiter Schenkel (54) eine in etwa senkrecht zum Fortsatz (56) verlaufende Bohrung (58) zur Führung des den ersten Kanal (22) erzeugenden Bohrers aufweist.

7. Gehrungsverbindersystem (10) nach Anspruch 5 oder 6, **dadurch gekennzeichnet, dass** die beiden Schenkel (52,54) schraubstockartig über einen Hebel (60) relativ zueinander bewegbar sind.

## Claims

1. Mitre joiner system (10) having first and second profiled rods (12, 14), of which at least one has a longitudinal groove (16) which is open or closed but can be opened if required, having a connecting piece (18) which has an outer thread (20) at one end and is inserted into a first channel (22) which extends transverse to at least one of the two mutually contacting surfaces of the first and second profiled rods (12, 14) which are mitre-jointed together, wherein the outer thread (20) is turned into the first counterbearing piece (24) inserted in the second profiled rod (14) and the opposite end is provided with an aperture (26) in such a way that this aperture (26) is inserted into a second counterbearing piece (30) which can be inserted into a channel (28) extending transverse to the first channel (22), which counterbearing piece has an inner thread (32) to receive a screw (34), the front end of which is engaged with the aperture (26), **characterised in that** the first channel (22) passes through both mitre-cut end faces of the profiled rods (12, 14) and the first counterbearing piece (24) is formed in a sleeve-like manner having a thread (38), extending transverse to the longitudinal axis of the sleeve, to receive the outer thread (20), and that the outer thread (20) is removed to form a contact surface (46), with which a fixing screw (48), turned into the first counterbearing piece (24), is brought into contact.

2. Mitre joiner system (10) as claimed in claim 1, **characterised in that** the connecting piece (18) has a narrowed region (40) between the outer thread (20) and the aperture (26).

3. Mitre joiner system (10) as claimed in claim 1 or 2, **characterised in that** the connecting piece (18) has a mark (42) which is disposed approximately centrally in the longitudinal direction.

4. Mitre joiner system (10) as claimed in any one of claims 1 to 3, **characterised in that** the two counterbearing pieces (24, 30), formed in a sleeve-like manner, have position indicators (44) on the end faces which face the outer surfaces of the profiled rods (12, 14) in the usage condition.

5. Mitre joiner system (10) as claimed in any one of claims 1 to 4, **characterised by** a drilling template (50) for producing a first channel (22) extending approximately perpendicular to the mitre surfaces.

6. Mitre joiner system (10) as claimed in claim 5, **characterised in that** the drilling template (50) is formed in an L shape, the first limb (52) of which can move perpendicular to the second limb (54) and has a protrusion (56) extending in the direction of the second limb (54) and approximately in parallel therewith, which protrusion is approximately of the shape and size of the sleeve-like counterbearing pieces (24, 30) and which protrusion (56) can be inserted into the opening provided for the sleeve-like counterbearing piece (24, 30) into the corresponding profiled rod (12, 14) in order to produce the first channel (22), and the second limb (54) of which has a bore (58) extending approximately perpendicular to the protrusion (56) to guide the drill producing the first channel (22).

7. Mitre joiner system (10) as claimed in claim 5 or 6, **characterised in that** the two limbs (52, 54) can be moved relative to each other via a lever (60) in the manner of a bench vice.

## Revendications

1. Système d'assemblage à onglet (10) avec des première et seconde barres profilées (12, 14), l'une au moins présentant une rainure longitudinale (16) ouverte ou fermée, mais pouvant être ouverte au besoin, avec un élément d'assemblage (18) présentant à une extrémité un filetage extérieur (20) et inséré dans un premier conduit (22) qui s'étend transversalement par rapport à l'une au moins des deux surfaces en contact mutuel des première et seconde barres profilées (12, 14) assemblées en onglet, étant précisé que le filetage extérieur (20) est vissé dans le premier élément d'appui (24) inséré dans la seconde barre profilée (14) et que l'extrémité opposée est pourvue d'un évidement (26) de telle sorte que cet évidement (26) soit placé dans un second élément d'appui (30) qui est apte à être inséré dans un conduit (28) transversal par rapport au premier conduit (22) et qui présente un filetage intérieur (32) pour recevoir une vis (34) dont l'extrémité avant est en prise avec l'évidement (26), **caractérisé en ce que** le premier conduit (22) traverse les deux surfaces frontales, coupées en onglet, des barres profilées (12, 14), et le premier élément d'appui (24) a la forme d'un manchon avec un filetage (38), transversal par rapport à l'axe longitudinal du manchon, pour recevoir le filetage extérieur (20), et **en ce que** le filetage extérieur (20) est supprimé pour former une surface de contact (46) avec laquelle une vis de fixation (48) vissée dans le premier élément d'appui (24) est mise en contact.

2. Système d'assemblage à onglet (10) selon la revendication 1, **caractérisé en ce que** l'élément d'assemblage (18) présente entre le filetage extérieur (20) et l'évidement (26) un rétrécissement (40).

3. Système d'assemblage à onglet (10) selon la revendication 1 ou 2, **caractérisé en ce que** l'élément d'assemblage (18) présente un marquage (42) qui est disposé à peu près au milieu, dans le sens longitudinal.

4. Système d'assemblage à onglet (10) selon l'une des revendications 1 à 3, **caractérisé en ce que** les deux éléments d'appui en forme de manchons (24, 30) présentent, sur leurs côtés frontaux qui sont tournés, en position d'utilisation, vers les surfaces extérieures des barres profilées (12, 14), des indicateurs de position (44).

5. Système d'assemblage à onglet (10) selon l'une des revendications 1 à 4, **caractérisé par** un gabarit de perçage (50) pour fabriquer un premier conduit (22) qui s'étend à peu près perpendiculairement aux surfaces à onglet.

6. Système d'assemblage à onglet (10) selon la revendication 5, **caractérisé en ce que** le gabarit de perçage (50) a une forme en L dont la première branche (52) est mobile perpendiculairement à la seconde branche (54) et présente un prolongement (56) qui s'étend dans le sens de ladite seconde branche (54) et à peu près parallèlement à celle-ci et qui a à peu près la forme et la taille des éléments d'appui en forme de manchons (24, 30), lequel prolongement (56) est apte à être inséré, pour fabriquer le premier conduit (22), dans l'ouverture prévue pour l'élément d'appui en forme de manchon (24, 30) dans la barre profilée correspondante (12, 14), et dont la seconde branche (54) présente un perçage (58) à peu près perpendiculaire au prolongement (56), pour guider le foret qui forme le premier conduit (22).

7. Système d'assemblage à onglet (10) selon la revendication 5 ou 6, **caractérisé en ce que** les deux branches (52, 54) sont mobiles l'une par rapport à l'autre à la manière d'un étau, grâce à un levier (60).
